# EUROPEAN PATENT APPLICATION

(11) **EP 4 353 399 A1**
(43) Date of publication of application: **17.04.2024**
(21) Application number: 22201667.7
(22) Date of filing: 14.10.2022
(51) Int. Cl.: B23K 31/02, B23K 11/00, B23K 11/02, B23K 11/20, B23B 51/00, B23P 15/32, B23K 101/00, B23K 101/20, B23K 103/18

(54) **WELDING METHOD FOR MANUFACTURING TOOL PARTS**

(71) Applicant: Li, Man Cheong, North Point Hong Kong SAR (HK)
(72) Inventor: Zhi, JingHua, Guangdong (CN)
(74) Representative: Dolleymores

(57) **Abstract**

The present invention relates to method of manufacturing a tool part, the method comprising: providing a first shaft portion (12) and a separate second shaft portion (14) formed of a different material to the first shaft portion (12), the first shaft portion (12) having a first contacting face (16) at an end thereof, and the second shaft portion (14) having a second contacting face (18) at an end thereof; aligning the first and second shaft portions (12, 14) along a common central axis (A), with the first contacting face (16) facing the second contacting face (18);
- directly or indirectly contacting the first contacting face (16) with the second contacting face (18);
- passing a current through the first and second shaft portions (12, 14), thereby increasing the temperature at an interface between the first and second contacting faces (16, 18), and simultaneously applying pressure between the first and second shaft portions (12, 14) in a direction of the common central axis (A), thereby welding the first shaft portion (12) to the second shaft portion (14) to form a shaft (10) of the tool part.

## Description

The present invention relates to a welding method for manufacturing tool parts, such as drill bits. The invention relates in particular, but not exclusively, to a welding method for manufacturing tool parts having a hardened end, for example a hardened cutting head.

Tool parts are commonly fabricated from metal, with the particular metal being chosen according to a desired property. Steel is commonly used, in particular, due to its relatively low cost. Performance of such tool parts may however be limited. Higher grade materials, such as tungsten carbide, may be used for specialist applications and enhanced performance, however parts formed exclusively from such materials can be prohibitively expensive. It is therefore known to provide tool parts formed from two or more different materials welded together, such that a higher grade material can be used for enhanced performance, whilst mitigating the increased cost.

Drill bits are one particular example. Drill bits formed of a variety of materials suitable for different applications are well known. For example, steel drill bits have advantages of relatively low cost and suitability for a wide range of applications, with hardened steels such as High Speed Steel (HSS) being available for drilling into harder surfaces such as metal. However, steel drill bits can suffer from a lack of durability due to the softness of the steel from which the drill bit is formed.

Alternative materials such as tungsten carbide can be used, which offer greater hardness, and thus suitability for drilling into harder surfaces. However, the high cost of tungsten carbide means that drill bits formed wholly of tungsten carbide are relatively expensive. This, coupled with the fact that tungsten carbide is relatively brittle compared to softer materials such as steel, means that use of drill bits formed wholly of tungsten carbide can be prohibitively expensive.

In order to combine the relative hardness of tungsten carbide with the relatively low cost of steel, it is well known to manufacture steel drill bits having a cutting tip formed of tungsten carbide. To manufacture such tungsten carbide tipped (TCT) drill bits, the drill bit is manufactured from steel and machined to provide the necessary fluted structure of the drill bit shaft. One or more slots are then machined into the cutting tip of the steel drill bit, into which is inserted a tungsten carbide tip in the form of a flat plate. To form a bond between the tungsten carbide tip and the steel shaft, the tip is coated with a brazing material and the tip is bonded to the steel shaft by braising, for example induction brazing.

However, this method has disadvantages. In particular, the durability of the drill bit is defined by the strength of the brazed bond between the tungsten carbide plate and the steel shaft. The brazed bond is typically weaker than the tungsten carbide material itself, meaning that the brazed bond is prone to fail long before the tungsten carbide material reaches its drilling capability. Accordingly, the hardness of material for which the drill bit can be used is limited by the strength of the brazed bond rather than the hardness of the tungsten carbide tip, meaning that the application of such drill bits remains limited.

It is known to improve bond strength by introducing cooperating surface features into the two portions to be joined. For example, in a basic example a first portion (e.g. a shaft of the tool part) may comprise a recess and a second portion (e.g. a cutting tip to be welded to the shaft) may comprise a complementary projection arranged to be received within the recess. Complementary concave/convex contacting faces are also known. Such arrangements are capable of withstanding greater stresses without failure of the weld joint. However, manufacture of such tool parts is difficult due to the need to form mutually engaging surfaces on the two portions of the tool part to be joined. This requires accurate machining, which increases time and expense of manufacture.

The present invention seeks to provide an improved method for manufacturing tool parts.

According to a first aspect of the present invention there is provided a welding method for the manufacture of tool parts, the method comprising:
- providing a first shaft portion and a separate second shaft portion formed of a different material to the first shaft portion, the first shaft portion having a first contacting face at an end thereof, and the second shaft portion having a second contacting face at an end thereof, wherein the first and second contacting faces are planar;
- aligning the first and second shaft portions along a common central axis, with the first contacting face facing the second contacting face;
- directly or indirectly contacting the first contacting face with the second contacting face;
- passing a current through the first and second shaft portions, thereby increasing the temperature at an interface between the first and second contacting faces, and simultaneously applying pressure between the first and second shaft portions in a direction of the common central axis, thereby welding the first shaft portion to the second shaft portion to form a shaft of the tool part,
   the method comprising a preheat phase, a welding phase and a tempering phase, wherein, during each of the preheat phase, the welding phase and the tempering phase, the current is in the range 1,000 A to 10,000 A,
   and wherein the maximum current applied in the welding phase is greater than the maximum current applied in each of the preheat phase and the tempering phase.

The method of the present invention provides a shaft of a tool part (for example a drill bit), which shaft is divided into two portions along its axis, the two portions being formed of different materials. Accordingly, the welding method can be used to form a variety of generally rod-shaped tool parts. The second shaft portion can form the active portion of the tool part, such as the cutting head of the drill bit, once the shaft has been machined appropriately to provide the necessary configuration. Accordingly, a particular material can be selected to form the active portion of the tool part, without it being necessary to form the entire tool part of said material. Instead, a portion of the shaft of the tool part, preferably a major portion of the shaft, can be formed of a different material, which may be cheaper, for example.

The present invention is particularly advantageous for forming a drill bit having a cutting head of tungsten carbide. The hardness of tungsten carbide provides significant advantages relating to the performance of the drill bit (e.g. for cutting through particularly hard materials). Thus, the second portion of the shaft can be formed of tungsten carbide to act as the cutting head of the drill bit. However, the first portion of the drill bit can be formed of another, cheaper material, such as steel. Accordingly, the cost of the drill bit is significantly reduced when compared to a drill bit formed wholly of tungsten carbide. Typically, manufacturing a drill bit in accordance with the method of the present invention can provide a cost saving of up to 90 %, when compared to forming an equivalent drill bit wholly from tungsten carbide.

According to the method of the present invention, the respective contacting faces of the first and second shaft portions are joined together by electric resistance welding. Passing a current through the first and second shaft portions results in a rapid increase in temperature at the interface between the first and second shaft portions as a result of the high electrical resistance at the interface. This increase in temperature causes the material of the first and/or second shaft portions in the region of the interface to be melted. At the same time, the first and second portions are forced together. When the current is terminated and the materials cool, a welded joint is formed between the respective contacting faces of the first and second shaft portion. The welded joint formed by the method of the present invention provides a significantly stronger bond than known brazing processes used to bond a tungsten carbide plate within a slot in the end of a steel drill bit, for example.

The electric current profile of the method of the present invention has been found to provide a strong weld joint between the first and second shaft portions having planar contacting faces. Accordingly, no other cooperating surface features on the respective contacting faces are required as is known in the art. The method therefore does not require precise machining of the contacting faces, making the method relative simple compared to known methods and less liable to inaccuracies in machining and failure of the welded joint. In particular, it has been found that tool parts formed by the method of the present invention have a welded portion with strength greater than the strength of the individual materials of the first and/or second shaft portions. Accordingly, the performance of the tool part is limited only by the strength of the individual materials of the first and second shaft portions and not by the strength of the weld joint. That is, the weld joint is not the weak point in the construction of the tool part.

The welding operation produces a shaft of a tool part. The shaft may be a blank shaft in the form of a substantially cylindrical rod, which blank shaft is subsequently machined to form the desired tool part. For example, the blank shaft may be machined to form a fluted body and cutting edge of a drill bit, and any other necessary features such as a shank for connecting an end of the drill bit to the chuck of a drill. However, it will be appreciated that in alternative embodiments the first and second shaft portions may be pre-machined into the required configuration prior to carrying out the welding operation. For example, the fluted body and cutting edge of a drill bit may be formed on the second shaft portion, which forms the cutting head of the drill bit, whilst a shank portion may be formed on the first shaft portion at an end of the shaft portion distal to the first contacting face thereof.

It will be appreciated that the welding method may be used in the manufacture of a variety of generally rod-shaped tool parts, such as tapping or milling tools, and is not limited to the manufacture of drill bits.

Preferably, the first and second shaft portions are both cylindrical rods. The first shaft portion may have a width or diameter which is equal to that of the second shaft portion.

In preferred embodiments, the first shaft portion has a length that is greater than the length of the second shaft portion. Accordingly, a major portion (main body) of the tool part may be formed from a relatively inexpensive material, whilst the active portion, such as the cutting head of the drill bit, is formed of a more expensive material having more desirable properties for a particular cutting operation, for example having an increased hardness.

The second shaft portion is preferably formed from a material having a hardness greater than the hardness of the material from which the first shaft portion is formed. In preferred embodiments, the first shaft portion may be formed from steel, which may be a high-speed steel.

In some embodiments, the second shaft portion comprises a carbide material, most preferably tungsten carbide. The second shaft portion may be formed wholly from a carbide material or may be formed from a composite material comprising a carbide material mixed with one or more other materials, such as metallic cobalt, for example. In one such embodiment, the second shaft portion is formed of a composite material comprising tungsten carbide and cobalt.

The second shaft portion may alternatively be formed of a high-speed steel produced by powder metallurgy (PM-HSS). High-speed steels produced by powder metallurgy (PM-HSS) are characterised by a hardness greater than that of high speed steel produced by other methods. In one embodiment, the second shaft portion is formed of a high-speed steel produced by powder metallurgy and the first shaft portion is formed of a conventional high-speed steel not produced by powder metallurgy, such as HSS4241, for example. A tool part formed in accordance with this embodiment benefits from the increased hardness of the second shaft portion formed of PM-HSS, combined with the lower cost of a conventional high-speed steel used for the first shaft portion.

A linkage medium may be provided between the first and second contacting faces prior to welding. Advantageously, the linkage medium is provided to improve the connection between the first and second contacting faces of the first and second shaft portions by a capillary effect. The linkage medium may preferably comprise a layer of nickel, which may preferably be provided on the second contacting face of the second shaft portion. It has been observed that the use of a nickel plate as a linkage medium provides a particularly strong welding joint between the first and second shaft portions. In addition, the provision of a linkage medium has been found to provide a barrier to prevent migration of materials out of and/or between the first and second shaft portions during the welding operation. For example, in an embodiment in which the second shaft portion is formed of a composite material comprising tungsten carbide and cobalt, the provision of a nickel plate as a linkage medium has been found to prevent migration of cobalt out of the material of the second shaft portion.

However, in alternative embodiments the first shaft portion and second shaft portion may be welded together without the use of a linkage medium between the first and second contacting faces. In one particular embodiment, the first shaft portion is formed of a conventional high-speed steel not produced by powder metallurgy, such as HSS4241, for example, and the second shaft portion is formed of a high-speed steel produced by powder metallurgy (PM-HSS), wherein no linkage medium is provided between the first and second contacting faces prior to welding.

Preferably, the output voltage of a power source used to pass the current through the first and second shaft portions is in the range 350 V to 400 V. In one embodiment, the output voltage of the power source used to pass the current through the first and second shaft portions is 380 V. With the use of voltages in this preferred range, the welding operation is performed at a high power, which has surprisingly been found to enable shaft portions to be bonded at planar contacting faces with greater strength, without damage or weakening of the weld strength.

In preferred embodiments, the pressure is applied between the first and second shaft portions by fixing a position of one of the first or second shaft portions, and moving the other of the first or second shaft portions towards the fixed one of the first or second shaft portions by a predetermined distance. Accordingly, when the respective "moving" shaft portion has been moved by the predetermined distance, the welding operation is completed.

The current may be terminated a predetermined period of time after termination of application of pressure between the first and second shaft portions. This allows for tempering of the welded joint.

Preferably, the shaft is machined to form a tool part of the desired shape subsequently to welding the first shaft portion to the second shaft portion. For example, the shaft may be machined to form a fluted body and/or cutting tip of a drill bit. In alternative embodiments, the first and second shaft portions may be machined prior to welding.

Preferably, the first shaft portion is held between an upper electrode body and a lower electrode body of a first electrode, and the second shaft portion is held between an upper electrode body and a lower electrode body of a second electrode.

Preferably, each of the first shaft portion and the second shaft portion is substantially cylindrical and each electrode body comprises a notch having a substantially semi-circular cross-section for accommodating the first or second shaft portion. Each electrode body is electrically conductive. This provides a stable arrangement with food electric contact between the shaft portions and electrode bodies.

Each notch preferably has a radius corresponding to the radius of the first or second shaft portion, such that the first or second shaft portion can be snugly received within the notch. It will be appreciated that the radius of each notch should be slightly larger than the radius of the first or second shaft portion to allow the first or second shaft portion to be accommodated within the notch, however the difference between the radii should be minimised. Each electrode preferably comprises a curved notch for accommodating a substantially cylindrical shaft portion. The curved notch of each electrode has an arcuate cross-sectional profile having a curve radius 0.01 mm larger than the radius of the shaft portion accommodated within the curved notch. Such an arrangement maximises contact area between each electrode and the respective shaft portion and therefore minimises electrical losses.

Preferably, one or more of the electrode bodies is formed of a copper-beryllium alloy and most preferably all of the electrodes are formed of a copper-beryllium alloy. Use of copper-beryllium alloy as the electrode material has been found to provide particularly good electrical conduction between the shaft portions and electrode bodies, thus providing effective welding in shorter times and minimal electrical losses. Additionally, the use of a copper-beryllium alloy has been found to increase the resistance to wear. Electrode bodies formed of a copper-tungsten alloy were found to require dressing after the manufacture of approximately 500 pieces, whereas electrode bodies formed of a copper-beryllium alloy required dressing after the manufacture of approximately 5,000 to 10,000 pieces, without detriment to the electrical contact with the first and second shaft portions or the efficacy of the welding process. In preferred embodiments, the copper-beryllium alloy comprises nickel, preferably in an amount 0.2 to 0.5 % nickel by weight. In particularly preferred embodiments, the copper-beryllium alloy is QBe2 beryllium bronze.

In a second aspect of the present invention, there is provided a tool part comprising a first shaft portion and a second shaft portion joined to the first shaft portion at respective contacting faces of the first and second shaft portions to define a shaft of the tool part, wherein the first shaft portion is joined to the second shaft portion by a method in accordance with the first aspect of the present invention.

In preferred embodiments, a welded joint between the first and second shaft portions is stable to a torque of at least 23 Nm, which can be determined as described below.

Non-limiting embodiments of the invention will now be described, by way of example only, with reference to the accompanying drawings in which:
Figures 1A to 1F provide a schematic illustration of the method for manufacturing a drill bit according to the present invention;
Figure 2A to 2D provide a diagrammatic illustration of an apparatus for performing the method of Figures 1A to 1F;
Figure 3 is a scanning electron microscope image of the welding interface between the first and second shaft portions of a drill bit formed in accordance with the present invention; and
Figure 4 is a scanning electron microscope image of the welding interface between the first and section shaft portions of a further drill bit formed in accordance with the present invention.

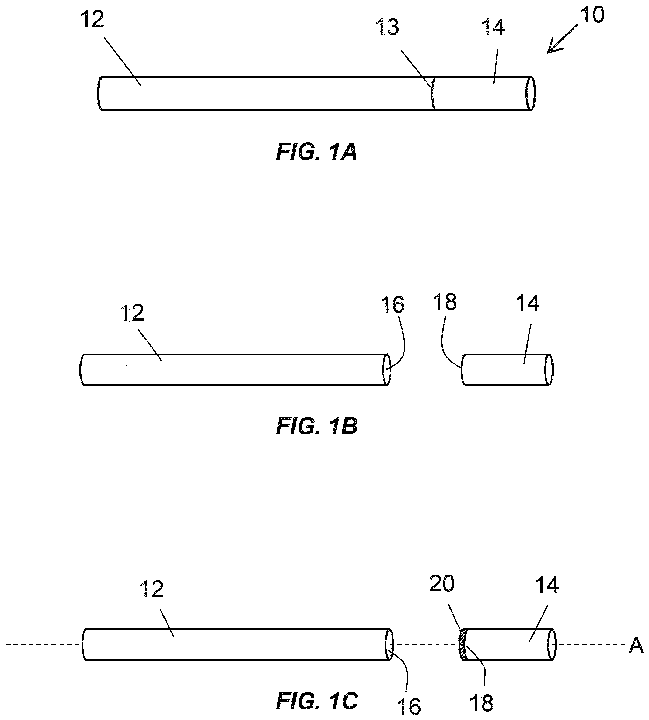

With reference to Figures 1A to 1F, there is illustrated a method for manufacturing a drill bit 1 in accordance with the present invention. Whilst the present invention is hereafter described with reference to the manufacture of a drill bit, it will be appreciated that the present invention also finds application for the manufacture of other tool parts having a generally cylindrical shape, such as tapping or milling tools, and is not limited to the manufacture of drill bits

Figures 1A to 1F provide a schematic representation of the formation of a blank shaft 10 which forms a precursor of a drill bit 1 in accordance with the present invention. The blank shaft 10 comprises a first shaft portion 12 and a separate second shaft portion 14, as shown in Figure 1A, in the form of substantially cylindrical rods of equal diameter joined at a weld joint 13 formed at an interface between the first shaft portion 12 and the second shaft portion 14. As shown in Figure 1B, the first shaft portion 12 has a planar first contacting face 16 at one end and the second shaft portion 14 has a planar second contacting face 18 at one end.

The first shaft portion 12 is formed of steel, whereas the second shaft portion 14 is formed of tungsten carbide 16. As such, the second shaft portion 14 has a hardness greater than that of the first shaft portion 12 and thus can be used as a cutting head of the drill bit, which is capable of penetrating harder materials than a drill bit formed wholly of steel, for example, and improving the durability of the drill bit. The first shaft portion 12 has a length greater than that of the second shaft portion 14, thus minimising the cost of the relatively expensive carbide second shaft portion 14.

In order to form the blank shaft 10, the first and second shaft portions 12, 14 are aligned on a common central axis A (Figure 1C), with the first contacting face 16 facing the second contacting face 18. Optionally, a nickel plate 20 may be provided on the second contacting face 18 to act as a linkage medium between the first and second shaft portions 12, 14, as shown in Figure 1C. The nickel plate may be omitted in alternative embodiments, or may be replaced with an alternative linkage medium.

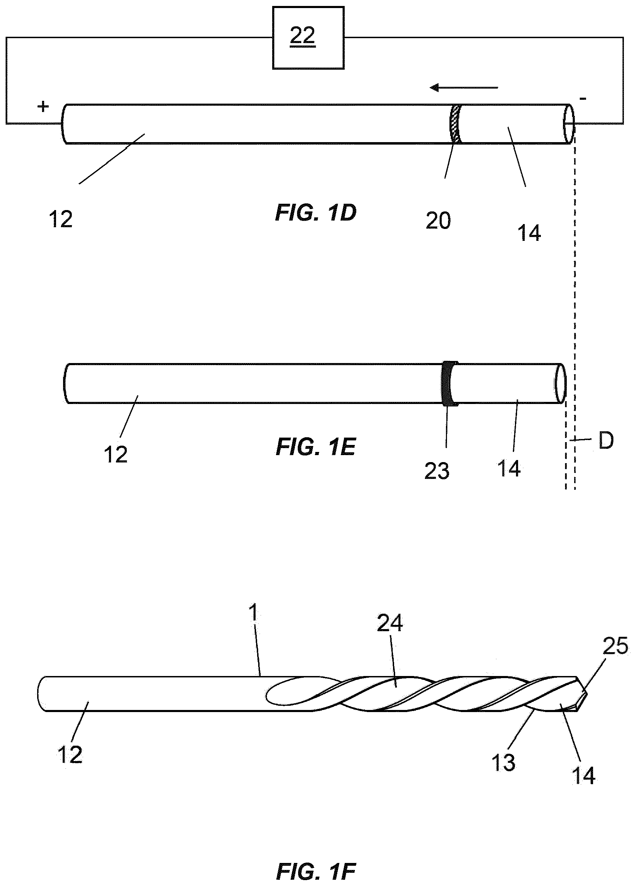

With reference to Figure 1D, each of the first and second shaft portions 12, 14 is connected to an electrode of an electric circuit including a power source 22. In the illustrated embodiment, the first shaft portion 12 is assigned as the cathode (+) and the second shaft portion is assigned as the anode (-), however in alternative embodiments the polarity may be reversed. The first contacting face 16 is brought into indirect contact with the second contacting face 18, the nickel plate 20 being positioned between the first and second contacting faces 16, 18. In alternative embodiments, the first and second contacting faces 16, 18 may contact each other directly.

Once contact is made between the first and second contacting faces 16, 18, a current is passed through the first and second shaft portions 12, resulting in a rapid increase in temperature at the interface between the first and second contacting faces 16, 18, thus melting the material of the first shaft portion 12 and nickel plate 20 at the interface. At the same time, pressure is applied between the first and second shaft portions 12, 14, by holding the first shaft portion 12 in a fixed position and pressing the second shaft portion 14 towards the first shaft portion 12 in the direction indicated by the arrow in Figure 1D (i.e. in a direction of the common central axis A), thereby welding the first shaft portion 12 to the second shaft portion 14. The pressure is maintained until the second shaft portion 14 has been displaced towards the first shaft portion 12 by a predetermined distance D, for example 1 mm, after which the application of pressure is terminated. The current is maintained for a predetermined period of time after the application of pressure has ceased to allow for tempering of the welded joint.

As shown in Figure 1E, pressing the second shaft portion 14 towards the first shaft portion 12 during the welding operation causes a ring shaped portion 23 of the melted material of the first shaft portion 12 to be displaced from the interface and to solidify around the circumference of the welded joint 13.

With reference to Figure 1F, the blank shaft 10 is subsequently machined to remove the ring-shaped portion 23 of material and to form a fluted body 24 of the drill bit 1, with the second shaft portion 14 forming the cutting head 25 of the drill bit. It will be appreciated that in alternative embodiments of the invention, the second shaft portion 14 may be pre-machined to provide a fluted configuration of the second shaft portion 14 prior to the second shaft portion 14 being welded onto the first shaft portion 12 in the manner described above. In this case, the only processing necessary after the welding process has been carried out will be removal of the ring-shaped portion 23 of material formed around the circumference of the welded joint 13, which may be removed by grinding, for example.

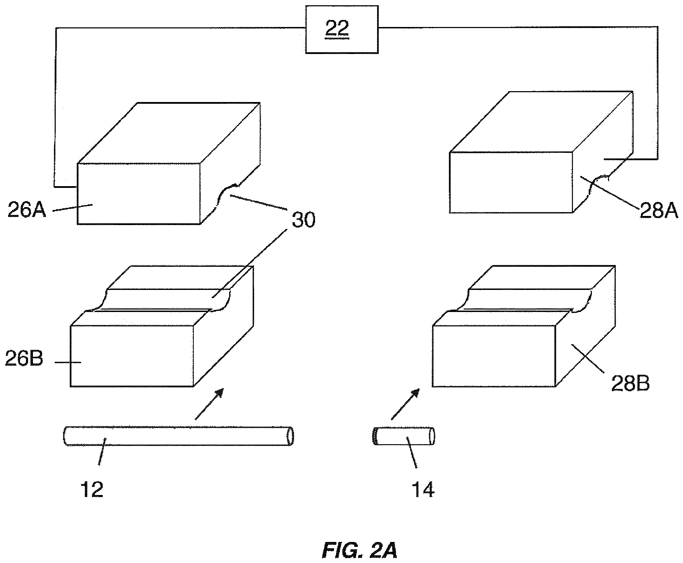

Figures 2A to 2D provide a schematic illustration of an apparatus for manufacturing a blank shaft 10 in accordance with the method described above. The apparatus comprises a first electrode 26 and a second electrode 28, each comprising an upper body 26A, 26B and a lower body 28A, 28B. Curved notches 30 are formed in each of the upper and lower electrode bodies 26A, 26B, 28A, 28B, the notches 30 being sized and shaped to accommodate the first and second shaft portions 12, 14. The curved notches are arcuate in shape and have a curve radius of approximately 0.01 mm larger than a radius of the first and second shaft portions 12, 14. The notches 30 are positioned such that when the first and second shaft portions 12, 14 are accommodated within the notches 30, the first and second shaft portions 12, 14 are aligned on a common central axis, as described above with reference to Figure 1C.

Each of the upper and lower electrode bodies 26A, 26B, 28A, 28B is formed of QBe2 beryllium bronze, a copper-beryllium alloy have the composition shown in Table 1.

**Table 1 - composition of copper-beryllium alloy QBe2 (wt.%).**

| Be | Si | Cr | Fe | Pb | Ni | Cu | Impurity |
|---|---|---|---|---|---|---|---|
| 1.8-2.1 | ≤0.15 | 1.35-1.65 | ≤0.15 | ≤0.005 | 0.2-0.4 | bal. | ≤0.5 |

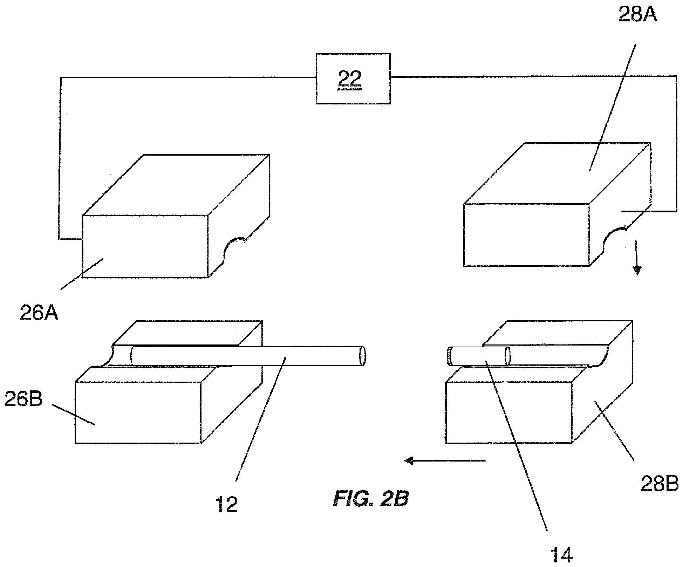

In use, the first and second shaft portions 12, 14 are transferred to the curved notches 30 of the lower bodies 26B, 28B of the electrodes 26, 28 by a feeding device (not shown), as illustrated in Figures 2A and 2B. The first and second shaft portions 12, 14 are preferably transferred using the same feeding device, however in alternative embodiments a separate feeding devices may be provided for feeding each of the first and second shaft portions into the curved notches 30 of the lower electrode bodies 26B, 28B.

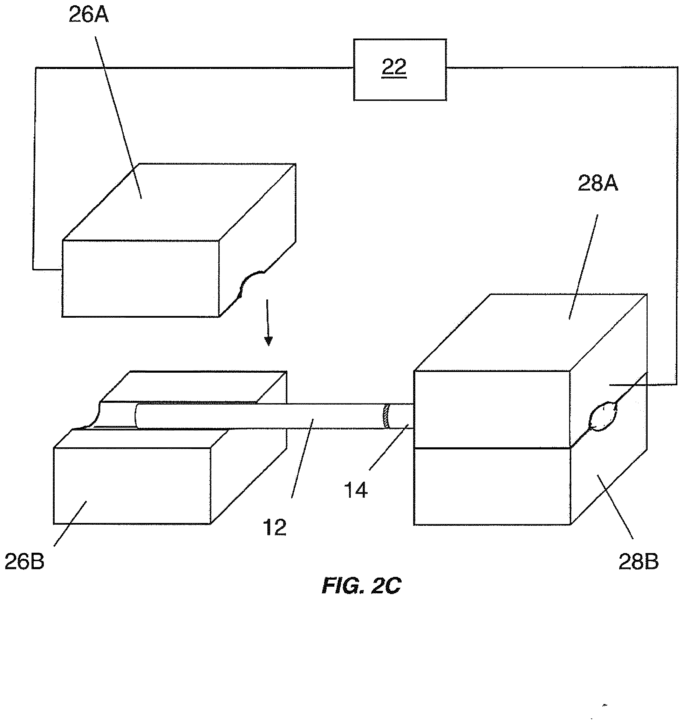

As shown in Figure 2C, once the first and second shaft portions 12, 14 have been transferred to the lower electrode bodies 26B, 28B, the upper body 28A of the second electrode 28 is engaged with the lower body 28B of the second electrode 28 so as to tightly clamp the second shaft portion 14 between the upper and lower bodies 28A, 28B of the second electrode 28. The second electrode 28 is then driven towards the first electrode 26, for example using a servomotor (not shown) until the second shaft portion 14 makes contact with the first shaft portion 12.

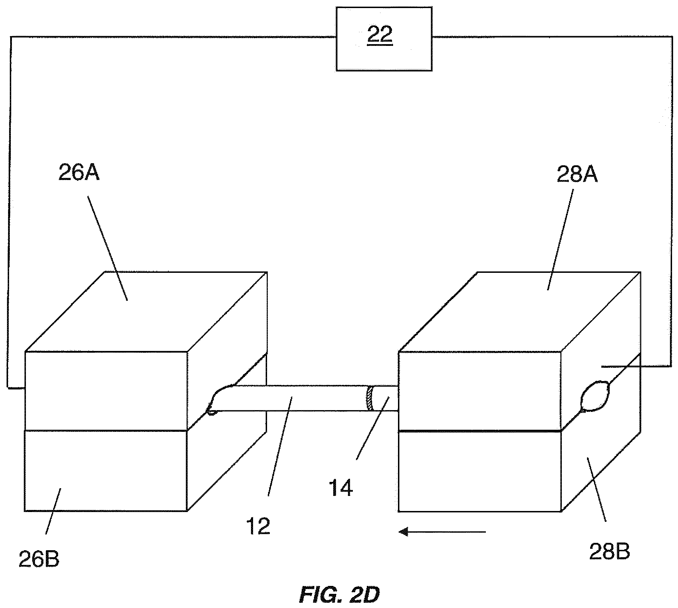

At the moment of contact, the upper body 26A of the first electrode 26 is moved to engage with the lower body 26B of the first electrode 26, so as to tightly clamp the first shaft portion 12 between the upper body 26A and lower body 26B in a fixed position and simultaneously complete the electrical circuit (Figure 2D). Accordingly, a current is passed through the first and second shaft portions 12, 14, resulting in a rapid increase of temperature at the interface between the first and second shaft portions 12, 14. Whilst the current is being applied, the second shaft portion 14 is pressed further towards the first shaft portion 12 by a predetermined distance (for example, 1mm) thereby welding the first and second shaft portions 12, 14 together to form a blank shaft 10, as described in detail above with reference to Figures 1A to 1E. The current remains on for a predetermined period of time after the applied pressure between the first and second shaft portions 12, 14 is terminated to allow for tempering of the blank shaft 10

Once the welding operation is complete, the first electrode 26 releases the blank shaft 10 by disengaging the upper and lower bodies 26A, 26B of the first electrode 26. The second electrode 28 is returned to its starting position and the blank shaft 10 is then released by disengaging the upper and lower bodies 28A, 28B of the second electrode 28, allowing the blank shaft 10 to drop into a collection tray. The process may then be repeated to form further blank shafts 10.

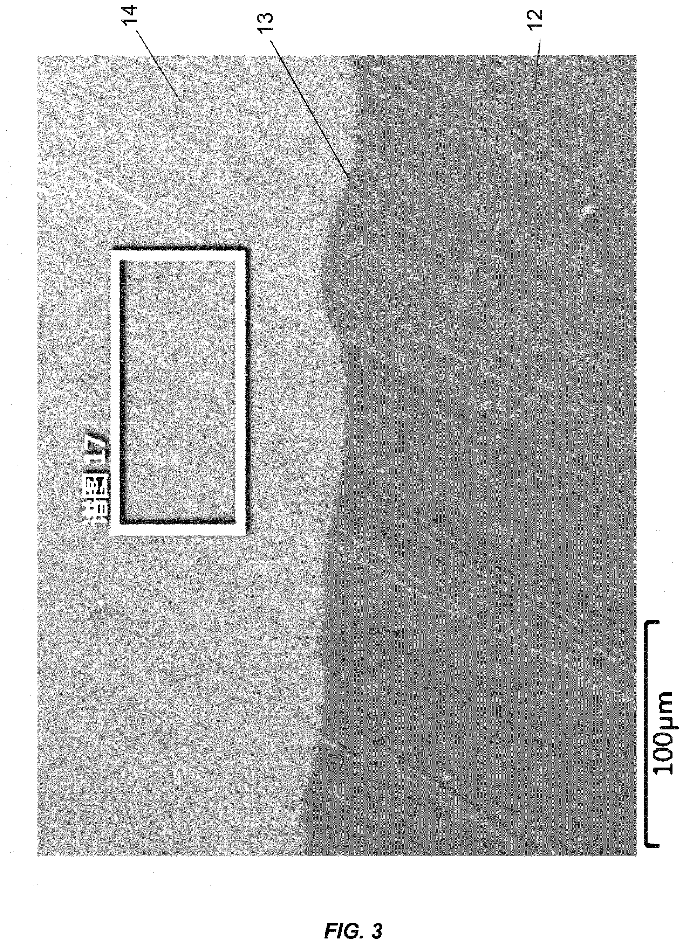

Figure 3 shows a scanning electron microscope (SEM) image of the welding joint 13 (or "welding interface") between the first shaft portion 12 and second shaft portion 14 of a drill bit formed in accordance with the present invention. The first shaft portion 12 was formed of steel and the second shaft portion 14 was formed of a material comprising tungsten carbide. A layer of nickel was used as a linkage medium between the first and second shaft portions 12, 14. As can be seen, the welding interface is a clear line, which indicates that the present invention provides a connection between the steel first portion 12 and the tungsten carbide second portion 14, with the nickel plate as a linkage medium therebetween, rather than melting the steel as a metallurgical welding layer.

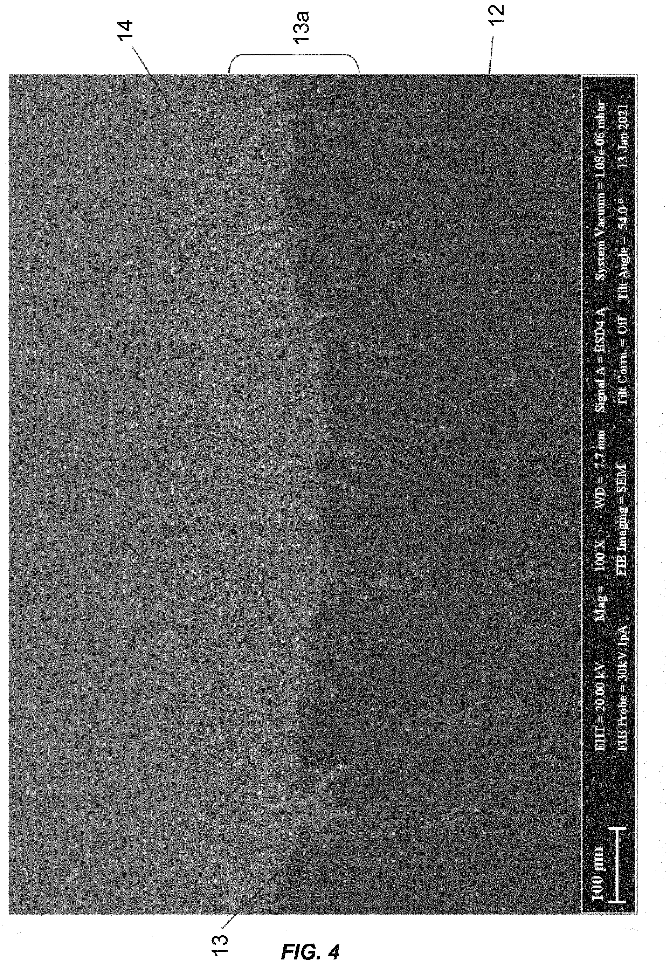

Figure 4 shows a further SEM image of a further drill bit formed in accordance with the present invention. In contrast to the drill bit of Figure 3, the drill bit shown in Figure 4 comprises a first shaft portion 12 formed of High Speed Steel (HSS4241) and a second shaft portion 14 formed of High Speed Steel produced by powder metallurgy (PM-HSS). No linkage medium was provided between the first and second shaft portions 12, 14. As can be seen in Figure 4, an intermediate region 13a is formed at the welding interface between the first shaft portion and the second shaft portion. In the intermediate region 13a, the material of the first shaft portion 12 and the second shaft portion 14 are melted and mix together to some extent. This is in contrast to the drill bit shown in Figure 3, in which a clear interface is seen between the first and second shaft portions 12, 14, where a linkage medium is used.

From Figures 3 and 4 it can be seen that the method of the present invention can be used to form a drill bit having first and second shaft portions formed of different materials, with or without the use of a linkage medium between the contacting faces of the first and second shaft portions.

The method of manufacturing a drill bit in accordance with the present invention is capable of providing a welding joint between the first and second shaft portions 12, 14 which is stable to a torque of at least 23 Nm, where the first shaft portion 12 is formed of steel and the second shaft portion is formed of tungsten carbide. Accordingly, the bond between the first and second shaft portions 12, 14 is stronger than the tungsten carbide material itself and thus the tungsten carbide cutting head of the finished drill bit will fail before the welded joint.

In order to test the strength of the welded joint, the following test method can be carried out, which is given by way of example for a blank shaft formed using the above described method having a diameter of 6 mm.

Firstly, the blank shaft 10 is ground to remove any residual ring-shaped portion 24 of material formed around the weld joint (see Figure 1E) such that the blank shaft has a uniform diameter of 6 mm. Next, 0.5 mm of material is ground off opposing sides of the diameter of the second shaft portion 14 to create two parallel flat portions on opposing sides of the second shaft portion 14, the opposing flat portions having an A/F (across flats) dimension of 5 mm. The first shaft portion 12 is then clamped within a bench vice and a torque wrench is engaged with the second shaft portion 14 at the flat portions thereof and rotated until either the weld joint fails or the second shaft portion 14 breaks. The torque indicated on the torque wrench at the moment of failure should be no less than 23 Nm.

The test method described above may be used for a blank shaft of any diameter. Opposing sides of the shaft are ground off to create parallel flat surfaces, which enable to the shaft to be clamped by a torque wrench.

When applying the above described test method to blank shafts of a variety of diameters formed in accordance with the present invention, it has been observed that the first shaft portion becomes twisted prior to any sign of damage to the weld joint. This indicates that the strength of the weld joint is greater than the strength of the first shaft portion, and therefore the performance of the blank shaft when used as a tool part is not limited by the weld strength. That is, failure of the tool part is less likely to be caused by damage to the weld joint than by damage (e.g. twisting) of the first shaft portion itself.

It will be appreciated that the parameters of the welding operation required to produce a weld joint having the desired strength will be variable depending on the diameter of the blank shaft being formed. In particular, different diameter blank shafts may require different currents and/or welding durations, for example. Examples of suitable operational parameters and current profiles for the welding operation for three different diameters of blank shaft are provided in Table 2 below. For all three examples, the output voltage of the power source is maintained at 380 V throughout the welding operation. In alternative embodiments of the invention, the voltage may be varied during the welding procedure. For example, the voltage may be reduced at the end of the welding procedure during the tempering phase.

The welding method comprises three phases during which current is applied: a preheat phase, a welding phase and a tempering phase. Application of pressure between the first and second shaft portions is commenced in a pressing phase prior to the preheat phase i.e. prior to the application of current. Application of pressure is terminated after the welding phase and prior to the tempering phase. Accordingly, no pressure is applied during the tempering phase, allowing for strengthening of the welded joint.

The maximum current applied during the welding phase is greater than the maximum current applied during each of the pre-heat phase and the tempering phase. This electric current profile has been found to provide a weld joint of the required strength between first and second shaft portions having planar contacting faces, regardless of the diameter of the shaft portion. The present invention therefore provides a welding method for joining two shaft portions, without the need for additional cooperating surface features on the two shaft portions to enhance the strength of the weld joint. The ease of manufacture of tool parts is therefore significantly improved.

In the examples provided, during the welding phase, current is ramped-up from a first lower value to a maximum applied current value, at which the current is maintained for a predetermined period of time (holding current). The current is subsequently ramped-down to a second lower value, which may be the same or different to the first lower value.

An optional cooling phase may be provided between the pre-heat phase and the welding phase, and between the welding phase and the tempering phase. During such cooling phases, the current is reduced to zero.

It will be appreciated that the specific parameters in Table 2 are given by way of example only and that the parameters may be varied whilst still providing a weld joint having the necessary strength for any shaft diameter, without deviating from the scope of the present invention.

**Table 2 - example welding operation parameters**

| | | **Shaft Diameter = 3.3 mm** | | **Shaft Diameter = 6.3 mm** | | **Shaft diameter = 13.3 mm** | |
|---|---|---|---|---|---|---|---|
| **Process phase** | | **Current (kA)** | **Time (ms)** | **Current (kA)** | **Time (ms)** | **Current (kA)** | **Time (ms)** |
| Pre-press | | 0 | 100 | 0 | 100 | 0 | 100 |
| Pressing | | 0 | 0 | 0 | 0 | 0 | 3 |
| Pre-heat | | 1 | 34 | 3 | 75 | 2.1 | 135 |
| Welding | Ramp-up | 1 | 23 | 2.3 | 28 | 2.2 | 138 |
| | Holding | 1.1 | 29 | 4.2 | 71 | 2.5 | 156 |
| | Ramp-down | 1 | 23 | 2 | 28 | 2.2 | 138 |
| Tempering | | 1 | 83 | 2 | 240 | 2.2 | 135 |
| Holding | | 0 | 5 | 0 | 5 | 0 | 100 |

The invention has been described above with reference to specific embodiments, given by way of example only. It will be appreciated that different arrangements of the system are possible, which fall within the scope of the appended claims.

## Claims

1. A welding method for the manufacture of tool parts, the method comprising:
- providing a first shaft portion and a separate second shaft portion formed of a different material to the first shaft portion, the first shaft portion having a first contacting face at an end thereof, and the second shaft portion having a second contacting face at an end thereof, wherein the first and second contacting faces are planar;
- aligning the first and second shaft portions along a common central axis, with the first contacting face facing the second contacting face;
- directly or indirectly contacting the first contacting face with the second contacting face;
- passing a current through the first and second shaft portions, thereby increasing the temperature at an interface between the first and second contacting faces, and simultaneously applying pressure between the first and second shaft portions in a direction of the common central axis, thereby welding the first shaft portion to the second shaft portion to form a shaft of the tool part,
the method comprising a preheat phase, a welding phase and a tempering phase, wherein, during each of the preheat phase, the welding phase and the tempering phase, the current is in the range 1,000 A to 10,000 A,
and wherein the maximum current applied in the welding phase is greater than the maximum current applied in each of the preheat phase and the tempering phase.

2. A method according to claim 1, wherein the first and second shaft portions are cylindrical rods.

3. A method according to any preceding claim, wherein the first shaft portion has a length that is greater than the length of the second shaft portion.

4. A method according to any preceding claim, wherein the second shaft portion is formed from a material having a hardness greater than the hardness of the material from which the first shaft portion is formed.

5. A method according to any preceding claim, wherein the first shaft portion is formed from steel.

6. A method according to any preceding claim, wherein the second shaft portion comprises tungsten carbide.

7. A method according to any one of claims 1 to 5, wherein the second shaft portion is formed of a high-speed steel produced by powder metallurgy.

8. A method according to any preceding claim, wherein a linkage medium is provided between the first and second contacting faces prior to welding.

9. A method according to any preceding claim, wherein an output voltage of a power source used to pass the current through the first and second shaft portions is in the range 350 V to 400 V.

10. A method according to any preceding claim, where pressure is applied between the first and second shaft portions by fixing a position of one of the first or second shaft portions, and moving the other of the first or second shaft portions towards the fixed one of the first or second shaft portions by a predetermined distance.

11. A method according to any preceding claim, wherein the current is terminated a predetermined period of time after termination of application of pressure between the first and second shaft portions.

12. A method according to any preceding claim, wherein the first shaft portion is held between an upper electrode body and a lower electrode body of a first electrode, and the second shaft portion is held between an upper electrode body and a lower electrode body of a second electrode.

13. A method according to claim 12, wherein each shaft portion is substantially cylindrical and wherein each electrode body comprises a curved notch for accommodating a respective shaft portion.

14. A method according to claim 13, wherein the notch of each electrode body has an arcuate cross-sectional profile having a curve radius 0.01 mm larger than a radius of the shaft portion accommodated within the notch.

15. A method according to any one of claims 12 to 14, wherein one or more of the electrode bodies is formed of a copper-beryllium alloy.
